# EUROPÄISCHE PATENTSCHRIFT

(11) **EP 3 819 200 B1**
(45) Veröffentlichungstag und Bekanntmachung des Hinweises auf die Patenterteilung: **27.04.2022**
(21) Anmeldenummer: 20205109.0
(22) Anmeldetag: 02.11.2020
(51) Int. Cl.: B62K 3/14, B62K 3/00, B62K 13/08, B62K 15/00, B62K 21/22, B62J 1/28

(54) **STUFENTANDEM**
SEMI-RECUMBENT
TANDEM COMBINÉ

(30) Priorität: 06.11.2019 DE 102019129944
(43) Veröffentlichungstag der Anmeldung: 12.05.2021
(73) Patentinhaber: Hase, Marec, 45731 Waltrop (DE)
(72) Erfinder: Hase, Marec, 45731 Waltrop (DE)
(74) Vertreter: Schneiders & Behrendt Bochum

(56) Entgegenhaltungen:
- DE-U1- 29 702 388
- FR-A- 922 247
- FR-A1- 2 887 218
- KR-A- 20170 082 741
- TW-U- M 515 511
- US-A- 4 502 705
- US-A- 5 607 171
- US-A- 5 964 472

## Beschreibung

Die Erfindung betrifft ein Stufentandem mit einem als Liegesitz ausgebildeten Vordersitz, einem gegenüber dem Vordersitz erhöht angeordneten Hintersitz, einem zwischen Vordersitz und Hintersitz angeordneten Lenker, der über ein Lenkgestänge mit dem gelenkten Vorderrad des Stufentandems in Verbindung steht, einer dem Hintersitz zugeordneten pedalbetätigten hinteren Tretkurbel, die über einen Kettentrieb mit dem angetriebenen Hinterrad des Stufentandems in Antriebsverbindung steht und einer dem Vordersitz zugeordneten Pedal betätigten vorderen Tretkurbel, die über einen oder mehrere Kettentriebe mit dem angetriebenen Hinterrad des Stufentandems in Verbindung steht, wobei der Hintersitz, das Hinterrad, der Lenker und die hintere Tretkurbel im einem hinteren Bereich an einem tragenden Tandemrahmen angeordnet sind und der Vordersitz, das Vorderrad und die vordere Tretkurbel in einem vorderen Bereich an dem tragende Tandemrahmen angeordnet sind, wobei das Vorderrad zwischen Vordersitz und vorderer Tretkurbel angeordnet ist.

Unter einem Stufentandem versteht man ein Tandem, bei welchem der auf dem Hintersitz sitzende Fahrer über den auf dem Vordersitz sitzenden Fahrer hinwegschauen kann. Um dies zu ermöglichen, ist der Vordersitz als tiefliegender Sessel oder Liegesitz ausgebildet, während der Hintersitz ein in normaler Höhe angeordneter Sattel ist. Der Lenker des Tandems befindet sich zwischen dem Vorder- und Hintersitz und wird von dem auf dem Hintersitz sitzenden Fahrer betätigt. Beiden Sitzen sind normalerweise pedalbetätigte Tretkurbeln zugeordnet, die über einen oder mehrere Kettentriebe mit dem angetriebenen Hinterrad des Tandems in Antriebsverbindung stehen. Ein solches Stufentandem ist beispielsweise aus der DE 297 02 388 U bekannt. Das zum Stand der Technik gehörende Dokument US 4 502 705 A offenbart die Merkmale der Präambel von Anspruch 1.

Solche Stufentandems erfreuen sich großer Beliebtheit, weil beide Fahrer einen freien Blick nach vorne haben und der Vordersitz einen höheren Fahrkomfort bietet, als dies bei üblichen Tandems der Fall ist. Der Hintersitz kann beispielsweise über bekannte Teleskopsattelstangen einfach auf die Größe des hinteren Fahrers eingestellt werden.

Eine Besonderheit eines Stufentandems ist, dass es ohne großen Aufwand zu einem Lastenrad umfunktioniert werden kann. Dies geschieht, indem auf dem Vordersitz oder anstelle des Vordersitzes eine Transportvorrichtung installiert wird, in der Großeinkäufe oder Ähnliches untergebracht werden können. In diesem Fall wird das Fahrrad nur von einem Fahrer auf dem Hintersitz angetrieben.

Tandems weisen aufgrund ihrer Konstruktion einen relativ großen Radstand auf. Ein Stufentandem weist einen weitaus geringeren Radstand als herkömmliche Tandems auf. Allerdings ist dieser immer noch relativ groß im Vergleich zu normalen Fahrrädern. Dieser relativ große Radstand hat bei unterschiedlichen Einsatzzwecken aber mehrere Nachteile.

Grundsätzlich gilt, je länger der Radstand, desto besser der Geradeauslauf. Allerdings verringert sich die Wendigkeit des Stufentandems bei größerem Radstand. Gerade wenn es auf die Wendigkeit ankommt, beispielsweise bei Fahrten auf engen Straßen innerorts, ist ein geringerer Radstand wünschenswert. Dies ist insbesondere der Fall, wenn das Stufentandem als Lastenrad für Einkäufe genutzt wird. Bei der Nutzung als Lastenrad und hierbei insbesondere bei der Leerfahrt ist es besonders wünschenswert den Radstand zu verkürzen, weil hierdurch auch der Schwerpunkt weiter zur Mitte des Gesamtsystems hin verlagert wird, wodurch die Steuerung des Stufentandems weiter vereinfacht wird.

Ein weiterer Nachteil des großen Radstandes liegt beim Transport des Stufentandems. Es ist gegenüber normalen Fahrrädern relativ schwierig dieses an oder auf meist genormten Fahrradträgern zu transportieren, weil es insgesamt zu lang ist. Es ist daher wünschenswert, das Stufentandem insgesamt für den Einsatz flexibler und für den Transport kompakter zu gestalten.

Es ist Aufgabe der Erfindung, ein Stufentandem der eingangs genannten Art dahingehend weiterzubilden, dass es individuell, flexibel und einfach für die jeweilige Anforderung einstellbar und für den Transport möglichst kompakt ist.

Zur Lösung dieser Aufgabe schlägt die Erfindung ausgehend von einem Stufentandem der eingangs genannten Art vor, dass der tragende Tandemrahmen eine erste Teleskopvorrichtung zwischen Vordersitz und Vorderrad aufweist.

Durch die Teleskopvorrichtung ist nicht nur die Gesamtlänge des Stufentandems besser einstellbar, sondern auch der Radstand. Somit kann das Stufentandem einerseits in seiner Gesamtlänge eingestellt werden und andererseits der Radstand auf die jeweiligen Anforderungen angepasst werden. Des Weiteren lässt sich der Abstand zwischen vorderer Tretkurbel und Vordersitz auf die Beinlänge des vorderen Fahrers einstellen, ohne dabei den Abstand zwischen vorderer Tretkurbel und Vorderrad zu verkürzen, wie es bei anderen technischen Lösungen der Fall wäre. Ist dieser Abstand nämlich zu klein, können die Fersen des vorderen Fahrers mit dem Vorderrad bei einer Kurvenfahrt kollidieren.

Eine bevorzugte Ausführungsform der Erfindung sieht vor, dass der tragende Tandemrahmen im vorderen Bereich zwischen vorderer Tretkurbel und Vorderrad eine zweite Teleskopvorrichtung aufweist. Hierdurch ist es möglich, den Abstand zwischen vorderer Tretkurbel und Vordersitz unabhängig vom Radstand einzustellen. Somit kann beispielsweise auch bei kurzem Radstand eine Person mit relativ langen Beinen als Fahrer auf dem Vordersitz platznehmen und bequem in die Pedale der vorderen Tretkurbel treten. Durch die Weitere Teleskopvorrichtung ist es zudem möglich, die Gesamtlänge des Stufentandems für den Transport weiter zu reduzieren.

Eine Weiterbildung der Erfindung sieht vor, dass der Lenker in Fahrtrichtung schwenkbar am tragenden Rahmen gelagert ist. Durch diese Maßnahme lassen sich die Neigung des Lenkers und der Abstand des Lenkers zum hinteren Fahrer einstellen, sodass beides in die für den Fahrer geeignete Position eingestellt werden kann.

Zudem ist es zweckmäßig, wenn der Lenker mittels zweier teleskopierbarer Griffstangen höhenverstellbar ist. Hierdurch lässt sich die für den hinteren Fahrer optimale Höhe des Stufentandems einstellen. Des Weiteren lässt sich die Gesamthöhe für den Transport verringern, indem die Griffstangen weitestgehend eingefahren werden.

Eine Weiterbildung gemäß der Erfindung sieht weiter vor, dass die Griffstangen mittels eines Schwenkmechanismus quer zur Fahrtrichtung schwenkbar sind. Durch diese Maßnahme lässt sich die Lenkerweite einstellen, sodass der hintere Fahrer komfortabel lenken kann. Zudem kann die Gesamtbreite des Stufentandems für den Transport reduziert werden.

Durch die Kombination der drei Einstellungen (Breite, Höhe und Abstand in Fahrtrichtung) lässt sich der Lenker optimal auf die Anforderungen des hinteren Fahrers einstellen.

Es ist auch sinnvoll, wenn die Neigung der Sitzlehne des Vordersitzes einstellbar ist. Hierdurch lässt sich die Sitzposition des vorderen Fahrers anpassen. Für eine bessere Sicht kann die Lehne aufrecht gestellt werden. Für eine aerodynamisch vorteilhafte Liegeposition kann die Sitzlehne geneigt werden. Für den Transport kann die Sitzlehne auch ganz eingeklappt werden, sodass die Gesamthöhe des Stufentandems minimiert wird.

Im Folgenden wir die Erfindung anhand der Zeichnungen näher erläutert. Es zeigen:
- Figur 1a und 1b:: Schematisch zwei Seitenansichten eines erfindungsgemäßen Stufentandems in einem Ausführungsbeispiel
- Figur 2a und 2b:: Schematisch zwei Rückansichten des erfindungsgemäßen Stufentandems
- Figur 3a und 3b:: Schematisch zwei weitere Teilseitenansichten des erfindungsgemäßen Stufentandems

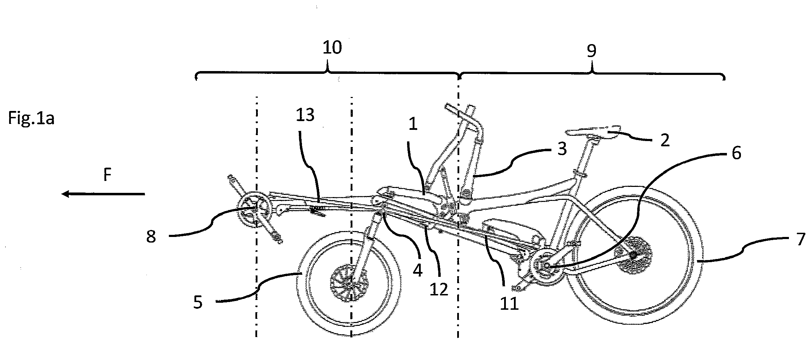

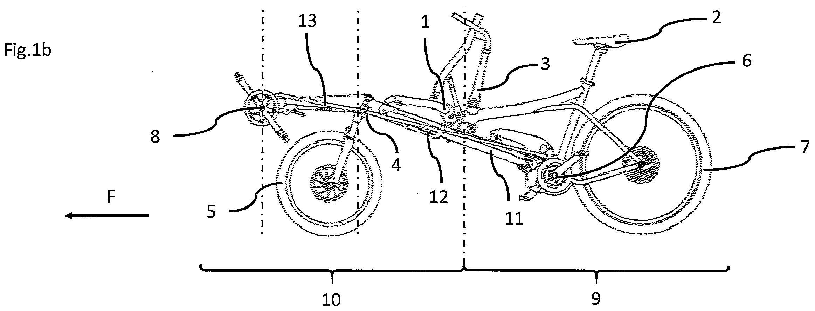

Figur 1a und 1b zeigen ein erfindungsgemäßes Stufentandem in zwei Seitenansichten. Das Stufentandem ist dazu eingerichtet in die durch den Richtungsfeil F angedeutete Fahrtrichtung bewegt zu werden. Das Stufentandem weist einen als Liegesitz ausgebildeten Vordersitz 1 auf, auf welchem ein vorderer Fahrer sitzend fahren kann, sowie einen gegenüber dem Vordersitz erhöht angeordneten Hintersitz 2, auf welchen ein hinterer Fahrer sitzen kann. Zwischen dem Vordersitz 1 und Hintersitz 2 ist ein Lenker 3 angeordnet, welcher zwei teleskopierbare Lenkerstangen aufweist. Der Lenker steht über ein Lenkgestänge 4 mit dem gelenkten Vorderrad 5 des Stufentandems in Verbindung. Über den Lenker 3 kann der auf dem Hintersitz sitzende hintere Fahrer das Stufentandem steuern. Des Weiteren weist das Stufentandem eine dem Hintersitz 2 zugeordnete pedalbetätigte hintere Tretkurbel 6 auf. Über die hintere Tretkurbel 6 wird das Hinterrad 7 des Stufentandems über einen hier nicht dargestellten Kettentrieb angetrieben. Auch dem Vordersitz 1 ist eine vordere Tretkurbel 8 zugeordnet, die über ein oder mehrere hier nicht dargestellte Kettentriebe mit dem Hinterrad 7 des Stufentandems in Verbindung steht.

Der Hintersitz 2, das Hinterrad 7, der Lenker 3 und die hintere Tretkurbel 6 sind in einem hinteren Bereich 9 an einem tragenden Tandemrahmens 11 festgelegt. Der Vordersitz 1, das Vorderrad 5 und die vordere Tretkurbel 8 sind in einem vorderen Bereich 10 mit dem tragenden Tandemrahmen 11 verbunden. Der tragende Tandemrahmen 11 weist eine erste Teleskopvorrichtung 12 zwischen Vordersitz 1 und Vorderrad 5 und eine zweite Teleskopvorrichtung 13 zwischen der vorderen Tretkurbel 8 und dem Vorderrad 5 auf.

Über die beiden Teleskopvorrichtungen 12,13 kann sowohl der Radstand, also der Abstand zwischen Hinterrad 7 und Vorderrad 5, als auch der Abstand zwischen Vordersitz 1 und vorderer Tretkurbel 8 auf die Beinlänge des vorderen Fahrers eingestellt werden. Entsprechend kann je nach geplanten Einsatzzweck der Radstand mittels der ersten Teleskopvorrichtung 12 verlängert oder verkürzt werden. Mittels der zweiten Teleskopvorrichtung 13 kann der Abstand zwischen vorderer Tretkurbel 8 und Vordersitz 1 eingestellt werden, ohne den Radstand zu verändern.

Unabhängig von der Einstellbarkeit des Radstands ist diese Kombination von zwei Teleskopvorrichtungen 12,13 besonders vorteilhaft, um einen ausreichend großen Abstand zwischen vorderer Tretkurbel 8 und Vorderrad 5 auch bei einem vorderen Fahrer mit relativ kurzen Beinen, beispielsweise einem Kind, zu ermöglichen. Bei einem zu geringem Abstand können nämlich die Fersen des vorderen Fahrers insbesondere bei der Kurvenfahrt mit dem Vorderrad 5 kollidieren. Dies ist aus den Figuren 1a und 1b ersichtlich. Während der Abstand zwischen Vordersitz 1 und vorderer Tretkurbel 8 in beiden Figuren gleich ist, ist der Abstand zwischen Vorderrad 5 und vorderer Tretkurbel 8 in Figur 1b sehr gering, sodass die Gefahr der oben beschriebenen Kollision besteht.

Für den Transport können beide Teleskopvorrichtungen 12,13 eingefahren werden, sodass die Gesamtlänge des Stufentandems insgesamt kleiner wird als bei der Benutzung.

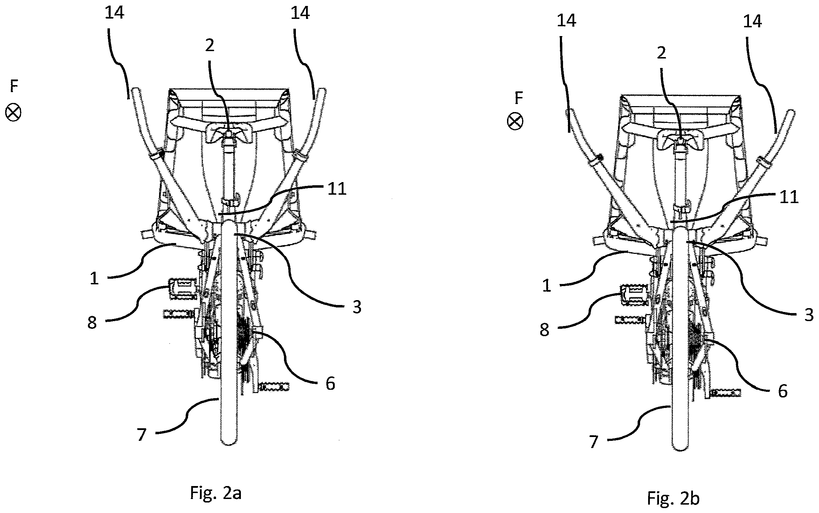

In Figur 2a und 2b ist ein erfindungsgemäßes Stufentandem in Rückansichten mit unterschiedlichen Lenkereinstellungen gezeigt. Zwei Griffstangen 14 sind quer zur Fahrtrichtung F verschwenkbar am tragenden Tandemrahmen 11 gelagert, sodass die Lenkerweite auf die Bedürfnisse des hinteren Fahrers eingestellt werden kann. Zudem sind die Griffstangen 14 auch teleskopierbar, sodass diese auf die gewünschte Höhe eingestellt werden können.

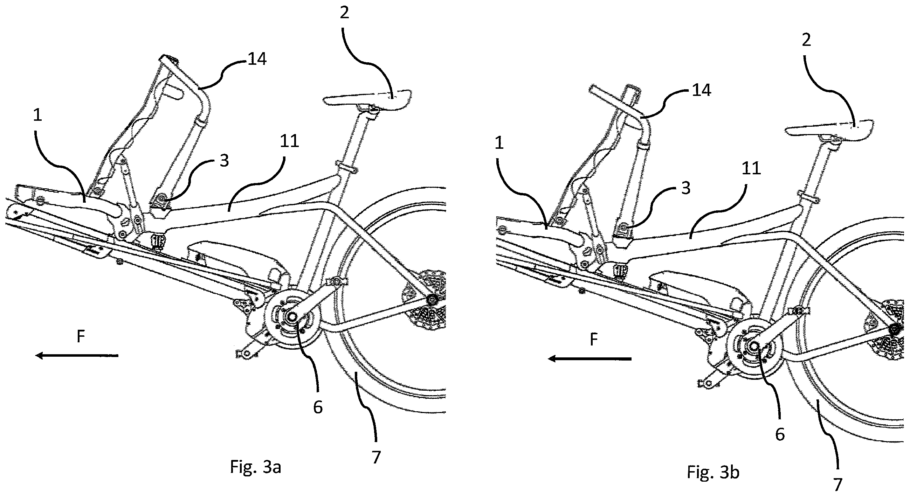

In Figur 3a und 3b sind zwei weitere Einstellmöglichkeit der Griffstangen 14 in zwei Seitenansichten dargestellt. Die Griffstangen sind zudem in Fahrtrichtung F verschwenkbar am tragenden Tandemrahmen 11 gelagert. Hierdurch kann der Abstand zwischen Hintersitz 2 und Griffstangen 14 auf die Bedürfnisse des hinteren Fahrers eingestellt werden. Über die einzelnen Einstellmöglichkeiten der Griffstangen 14 können diese also optimal für den hinteren Fahrer positioniert werden.

Für den Transport können die Griffstangen 14 auch ganz an den tragenden Tandemrahmen 11 herangeschwenkt werden. Die Sitzlehne des Vordersitzes 1 kann heruntergeschwenkt werden und der Hintersitz 2 ist ebenfalls über eine Teleskopsattelstange einfahrbar, sodass die Gesamthöhe des Stufentandems weiter verringert wird. Alternativ kann der Vordersitz beim Transport auch komplett abmontiert werden.

Das Stufentandem lässt sich also für den Transport hinsichtlich Länge, Höhe und Breite minimieren, sodass es auf herkömmlichen Fahrradträgern am Auto transportiert werden kann.

### Bezugszeichenliste:

- 1: Vordersitz
- 2: Hintersitz
- 3: Lenker
- 4: Lenkergestänge
- 5: Vorderrad
- 6: hintere Tretkurbel
- 7: Hinterrad
- 8: vordere Tretkurbel
- 9: hinterer Bereich
- 10: vorderer Bereich
- 11: tragender Tandemrahmen
- 12: erste Teleskopvorrichtung
- 13: zweite Teleskopvorrichtung
- 14: Griffstange
- F: Fahrtrichtung

## Patentansprüche

1. Stufentandem, mit
- einem Vorderrad (5) und einem Hinterrad (7),
- einem als Liegesitz ausgebildeten Vordersitz (1),
- einem gegenüber dem Vordersitz erhöht angeordneten Hintersitz (2),
- einem zwischen Vordersitz und Hintersitz (2) angeordneten Lenker (3), der über ein Lenkgestänge (4) mit dem gelenkten Vorderrad (5) des Stufentandems in Verbindung steht,
- einer dem Hintersitz (2) zugeordneten pedalbetätigten hinteren Tretkurbel (6), die über einen Kettentrieb mit dem angetriebenen Hinterrad (7) des Stufentandems in Antriebsverbindung steht
- und einer dem Vordersitz (1) zugeordneten Pedal betätigten vorderen Tretkurbel (8), die über einen oder mehrere Kettentriebe mit dem angetriebenen Hinterrad (7) des Stufentandems in Verbindung steht,
- wobei der Hintersitz (2), das Hinterrad (7), der Lenker (3) und die hintere Tretkurbel (6) in einem hinteren Bereich (9) an einem tragenden Tandemrahmen (11) angeordnet sind,
- und der Vordersitz (1), das Vorderrad (5) und die vordere Tretkurbel (8) in einem vorderen Bereich (10) am tragenden Tandemrahmen (11) angeordnet sind,
- wobei das Vorderrad (5) zwischen Vordersitz (1) und vorderer Tretkurbel (8) angeordnet ist,
**dadurch gekennzeichnet,**
- **dass** der tragende Tandemrahmen (11) eine erste Teleskopvorrichtung (12) zwischen Vordersitz (1) und Vorderrad (5) aufweist.

2. Stufentandem nach Anspruch 1, **dadurch gekennzeichnet, dass** der tragende Tandemrahmen (11) im vorderen Bereich (10) zwischen vorderer Tretkurbel (8) und Vorderrad (5) eine zweite Teleskopvorrichtung (13) aufweist.

3. Stufentandem nach Anspruch 1 oder 2, **dadurch gekennzeichnet, dass** der Lenker (3) in Fahrtrichtung (F) schwenkbar am tragenden Rahmen (11) gelagert ist.

4. Stufentandem nach einem der vorgenannten Ansprüche, **dadurch gekennzeichnet, dass** der Vordersitz (1) eine Sitzlehne und eine Sitzfläche aufweist, wobei die Sitzlehne verschwenkbar zur Sitzfläche angeordnet ist.

5. Stufentandem nach einem der vorgenannten Ansprüche, **dadurch gekennzeichnet, dass** der Lenker (3) mittels zweier teleskopierbarer Griffstangen (14) höhenverstellbar ist.

6. Stufentandem nach Anspruch 5, **dadurch gekennzeichnet, dass** die Griffstangen (14) mittels eines Schwenkmechanismus quer zur Fahrtrichtung (F) schwenkbar sind.

## Claims

1. Semi-recumbent tandem comprising
- a front wheel (5) and a back wheel (7),
- a front seat (1) formed as a reclining seat,
- a back seat (2) arranged in an elevated manner compared with the front seat,
- a handlebar (3), which is arranged between the front seat and the back seat (2) and is connected to the steerable front wheel (5) of the semi-recumbent tandem by means of a steering linkage (4),
- a rear crank (6), which is assigned to the back seat (2), operated by a pedal and drivingly connected to the driven back wheel (7) of the semi-recumbent tandem by means of a chain drive,
- and a front crank (8), which is assigned to the front seat (1), operated by a pedal and connected to the driven back wheel (7) of the semi-recumbent tandem by means of one or more chain drives,
- the back seat (2), the back wheel (7), the handlebar (3) and the rear crank (6) being arranged in a rear region (9) on a load-bearing tandem frame (11),
- and the front seat (1), the front wheel (5) and the front crank (8) being arranged in a front region (10) on the load-bearing tandem frame (11),
- the front wheel (5) being arranged between the front seat (1) and the front crank (8),
**characterised in that**
- the load-bearing tandem frame (11) has a first telescoping device (12) between the front seat (1) and the front wheel (5).

2. Semi-recumbent tandem according to claim 1, **characterised in that** the load-bearing tandem frame (11) has a second telescoping device (13) in the front region (10) between the front crank (8) and the front wheel (5).

3. Semi-recumbent tandem according to either claim 1 or claim 2, **characterised in that** the handlebar (3) is mounted on the load-bearing frame (11) so as to be pivotable in the direction of travel (F).

4. Semi-recumbent tandem according to any of the preceding claims, **characterised in that** the front seat (1) has a backrest and a seat surface, the backrest being arranged so as to be pivotable relative to the seat surface.

5. Semi-recumbent tandem according to any of the preceding claims, **characterised in that** the handlebar (3) can be adjusted in height by means of two telescopic handles (14).

6. Semi-recumbent tandem according to claim 5, **characterised in that** the handles (14) can be pivoted transversely to the direction of travel (F) by means of a pivot mechanism.

## Revendications

1. Tandem combiné, comprenant
- une roue avant (5) et une roue arrière (7),
- un siège avant (1) configuré sous forme de siège couché,
- un siège arrière (2) agencé pour être surélevé par rapport au siège avant,
- un guidon (3) agencé entre le siège avant et le siège arrière (2), qui est en liaison par l'intermédiaire d'une tringlerie de direction (4) avec la roue avant dirigée (5) du tandem combiné,
- un pédalier arrière (6) actionné par pédales, associé au siège arrière (2), qui est en liaison d'entraînement par l'intermédiaire d'une transmission par chaîne avec la roue arrière entraînée (7) du tandem combiné
- et un pédalier avant (8) actionné par pédales, associé au siège avant (1), qui est en liaison par l'intermédiaire d'une ou de plusieurs transmissions par chaîne avec la roue arrière entraînée (7) du tandem combiné,
- le siège arrière (2), la roue arrière (7), le guidon (3) et le pédalier arrière (6) étant agencés dans une zone arrière (9) sur un cadre de tandem porteur (11),
- et le siège avant (1), la roue avant (5) et le pédalier avant (8) étant agencés dans une zone avant (10) sur le cadre de tandem porteur (11),
- la roue avant (5) étant agencée entre le siège avant (1) et le pédalier avant (8),
**caractérisé en ce que**
- le cadre de tandem porteur (11) présente un premier dispositif télescopique (12) entre le siège avant (1) et la roue avant (5).

2. Tandem combiné selon la revendication 1, **caractérisé en ce que** le cadre de tandem porteur (11) présente un deuxième dispositif télescopique (13) dans la zone avant (10) entre le pédalier avant (8) et la roue avant (5).

3. Tandem combiné selon la revendication 1 ou 2, **caractérisé en ce que** le guidon (3) est monté sur le cadre porteur 15 (11) de manière à pouvoir pivoter dans le sens de la marche (F).

4. Tandem combiné selon l'une quelconque des revendications précédentes, **caractérisé en ce que** le siège avant (1) présente un dossier de siège et une surface de siège, le dossier de siège étant agencé de manière à pouvoir pivoter par rapport à la surface de siège.

5. Tandem combiné selon l'une quelconque des revendications précédentes, **caractérisé en ce que** le guidon (3) est réglable en hauteur au moyen de deux poignées télescopiques (14).

6. Tandem combiné selon la revendication 5, **caractérisé en ce que** les poignées (14) peuvent pivoter transversalement au sens de la marche (F) au moyen d'un mécanisme de pivotement.
